Europäisches Patentamt

European Patent Office

Office européen des brevets

(11) Veröffentlichungsnummer: **0 216 073**
**B1**

(12) **EUROPÄISCHE PATENTSCHRIFT**

(45) Veröffentlichungstag der Patentschrift:
20.09.89

(21) Anmeldenummer: 86110361.2

(22) Anmeldetag: 26.07.86

(51) Int. Cl.⁴: **G02B 6/44, G02B 6/24**

(54) Vorrichtung zur Spleissaufnahme von Lichtwellenleiter-Adern.

(30) Priorität: 23.08.85 DE 3530162

(43) Veröffentlichungstag der Anmeldung:
01.04.87 Patentblatt 87/14

(45) Bekanntmachung des Hinweises auf die Patenterteilung:
20.09.89 Patentblatt 89/38

(84) Benannte Vertragsstaaten:
BE DE FR GB IT NL SE

(56) Entgegenhaltungen:
EP-A- 0 055 231
EP-A- 0 101 970
DE-A- 3 405 309
DE-A- 3 413 401
FR-A- 2 559 277

PATENTS ABSTRACTS OF JAPAN, Band 8,
Nr. 113 (P-276)[1550], 26. Mai 1984 & JP-A-59 19914

(73) Patentinhaber: **Walter Rose GmbH & Co. KG,
Lütkenheider Strasse 2, D-5800 Hagen 1(DE)**

(72) Erfinder: **Reitmeyer, Georg, Dipl.-Ing.,
Echeinteichweg 59, D-5860 Iserlohn(DE)**
Erfinder: **Weber, Rolf-Udo, Columbusstrasse 19,
D-4330 Mühlheim(DE)**
Erfinder: **Fremgen, Dieter, Dipl.-Ing.,
Hans-Böckler-Strasse 46, D-5603 Wülfrath(DE)**

(74) Vertreter: **Patentanwälte Meinke und Dabringhaus
Dipl.-Ing. J. Meinke Dipl.-Ing. W. Dabringhaus,
Westenhellweg 67, D-4600 Dortmund 1(DE)**

## Beschreibung

Die Erfindung richtet sich auf eine Vorrichtung zur Spleißaufnahme von Lichtwellenleiter-Fasern und/oder -Adern mit zwei über ein Filmscharnier miteinander verbundenen, zu einer Kassette verschließbaren Kunststoffhälften mit Führungsbögen aufweisenden Halterungen zur Aufnahme mehrerer Faser- und/oder Aderwicklungen als Materialreservoir.

Um Spleiße von Lichtwellenleitern zu bilden, müssen die Fasern eines ankommenden Kabels mit denen der abgehenden Kabel stumpf verbunden werden und dazu ist es notwendig, daß ein gewisser Vorrat an Lichtwellenleiter-Fasern bzw. an mehrere Fasern aufweisenden Adern zur Verfügung steht, um diese in die Spleißbildungsgeräte einlegen zu können. Es ist daher bekannt, Lichtwellenleiter-Adern bzw. -Fasern um Führungsbögen aufweisende Halterungen an Kunststoffplatten zu wickeln und diese Elemente dann in dem Verteiler oder Spleißkästen zur Verfügung zu halten.

Nachteilig an den bekannten Einrichtungen ist, daß in der Regel unterschiedlich gestaltete Wickelhilfen benötigt werden, je nach Einbausituation oder der Einlaufrichtung der ankommenden Adern in diesen Wickelhilfen. Ein weiterer Nachteil besteht darin, daß die freien Enden der Glasfasern für die Zeit nicht geschützt sind, für die sie frei in diesen Wickelhilfen untergebracht sind.

Aus der DE-A 3 405 309 ist bereits eine darüber hinaus verbesserte Vorrichtung zur Spleißaufnahme von Lichtwellenleiter-Fasern und/oder -Adern mit zwei über ein Filmscharnier miteinander verbundenen, zu einer Kassette verschließbaren Kunststoffhälften mit Führungsbögen aufweisenden Halterungen zur Aufnahme mehrerer Faser- und/oder Aderwicklungen als Materialreservoir bekannt, wie sie eingangs als Ausgangspunkt der Erfindung angegeben ist.

Diese bekannte Vorrichtung hat aber den Nachteil, daß sie nur eine Einbausituation der einlaufenden Glasfasern oder -adern zuläßt, ebenso wie nur eine Ablaufrichtung, d.h. bei unterschiedlich einlaufenden Adern müssen unterschiedlich gestaltete Vorrichtungen herangezogen werden oder die Vorrichtungen müssen in ihrer Einbaulage geändert werden, was in der Regel vergleichsweise aufwendig ist.

Demgegenüber liegt der Erfindung die Aufgabe zugrunde, zwei im wesentlichen senkrecht aufeinander stehende Einbaurichtungen innerhalb einer Kassette möglich zu machen, wobei die Handhabung dadurch vereinfacht wird und gleichzeitig ein Schutz für die freien Enden der Glasfasern gewährleistet ist.

Mit einer Vorrichtung der eingangs bezeichneten Art wird diese Aufgabe gemäß der Erfindung dadurch gelöst, daß die dem Scharnierbereich zugewandten Ecken der Kassette mit unterschiedliche Zuführrichtungen der Lichtwellenfasern und/ oder -adern zulassenden Klemmkörpern ausgerüstet sind, und daß die Klemmkörper in zwei unterschiedlichen Einbaurichtungen festlegbar sind.

Die Ausbildung als Kassette macht es möglich, die Vorrichtung sehr kompakt zu gestalten, wobei wesentlich ist, daß unterschiedlich festlegbare Klemmkörper die vereinfachte Handhabung gewährleisten.

Mit der Gestaltung des Einlaufbereiches bzw. Ablaufbereiches der ankommenden bzw. abgehenden Lichtwellenleiter-Fasern bzw. -Adern ist es möglich, die gleiche Kassette in unterschiedlichen Einbausituationen heranzuziehen, der Benützer kann dann je nach Einaluf- bzw. Ablaufrichtung der Adern die entsprechenden Einrichtungen, etwa die Klemmkörper umstecken.

Nach der Erfindung ist auch vorgesehen, daß die Klemmkörper mit einer Mehrzahl von Einlaufrinnen für die Lichtwellenleiter-Adern ausgerüstet sind, wobei die Einlaufrinnen von einem über ein Filmscharnier einstückig mit dem Grundkörper verbundenen Deckel fixierbar sind. Diese Gestaltung macht die Handhabung sehr einfach, weil beispielsweise eine ankommende Ader zunächst abisoliert wird und isolierte Teile in eine Einlaufrinne eingelegt werden, der Deckel wird geschlossen und die ankommende Ader ist klemmend dort gehalten.

Wesentlich für die Erfindung ist auch eine Gestaltung, die darin besteht, daß jede Kassettenhälfte mit einem fettgefüllten Aufnahmeelement zur Aufnahme der Enden abgesetzter Lichtwellenleiter ausgerüstet ist. Um die Lichtwellenleiterenden gegen den Eintritt von Feuchtigkeit zwischen der Seele und dem sogenannten Coating zu schützen, werden die freien Enden nach Aufwickeln der Fasern um die Führungsbögen, dann dort in die Aufnahmeelemente eingesteckt und sind nicht nur dort gehalten, sondern gleichzeitig stirnseitig gegen Feuchtigkeit durch das Fett od. dgl. geschützt.

In Ausgestaltung ist vorgesehen, daß wenigstens eine Hälfte der Kassette mit Führungsschienen zum Eingriff in entsprechende Halteelemente und/oder zur Verbindung mit einer benachbarten Kassette ausgerüstet ist. Diese Halteschienen haben den Vorteil, daß in Abzweiggehäusen, bei denen eine Vielzahl von Kassetten untergebracht sind, diese auf einfachen Traggerüsten aufschiebbar sind. Auch kann die Gestaltung so getroffen sein, daß eine Mehrzahl von Kassetten zu einer Einheit über die Führungsschienen zusammengeschoben werden kann und diese Einheit dann an einem gemeinsamen Tragorgan anbringbar ist.

Werden die Kassetten nur einzeln eingesetzt, beispielsweise bei Hausanschlüssen, so kann es zweckmäßig sein, eine andere Befestigungsart zu wählen, z. B. eine Verschraubung. Hierzu sieht die Erfindung vor, daß die Kassette mit einem im wesentlichen mittigen Montagezapfen und damit fluchtenden Bohrungen zum Durchtritt einer Fixierschraube od. dgl. ausgerüstet ist.

Schließlich sieht die Erfindung noch vor, daß die Kassettenhälften über Verriegelungszapfen o. dgl. gegeneinander in der Verschlußlage festlegbar sind. Hier können Rastnocken, Verhakungen oder andere Klemmelemente vorgesehen sein, ohne daß die Erfindung hier auf eine spezielle Gestaltung beschränkt wäre.

Die Erfindung ist nachstehend anhand der Zeichnung beispielsweise näher erläutert. Diese zeigt in

Fig. 1 eine Seitenansicht der Vorrichtung,

Fig. 2 eine Aufsicht auf die aufgeklappte Kassette,

Fig. 3 eine Seitenansicht eines Klemmkörpers und in

Fig. 4 die Aufsicht auf den aufgeklappten Klemmkörper in vergrößerter Darstellung.

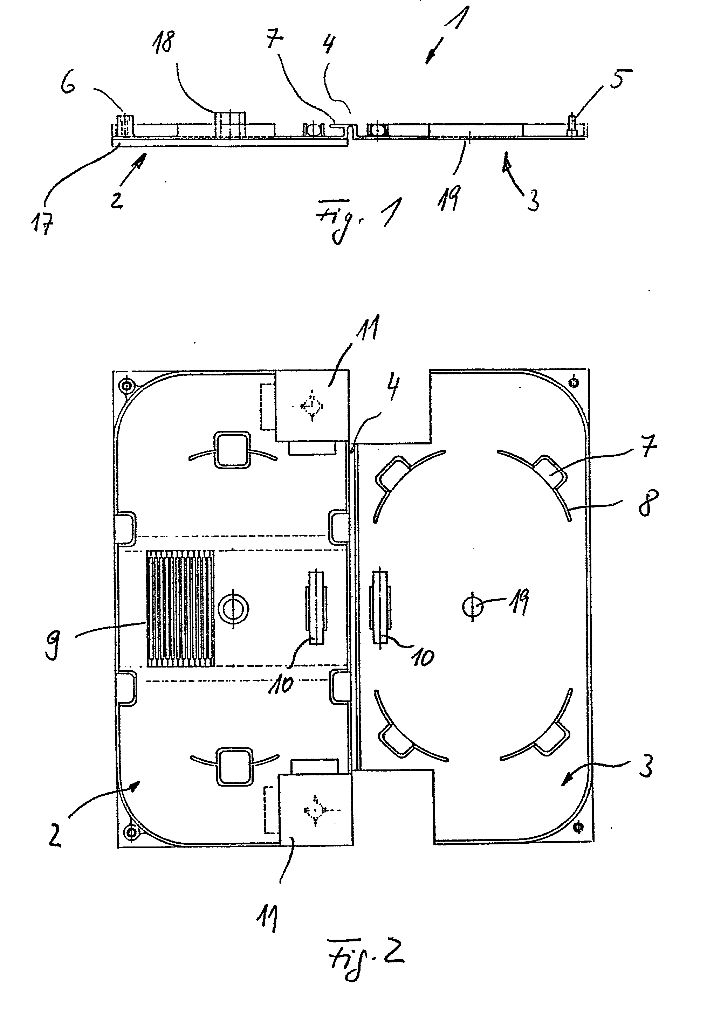

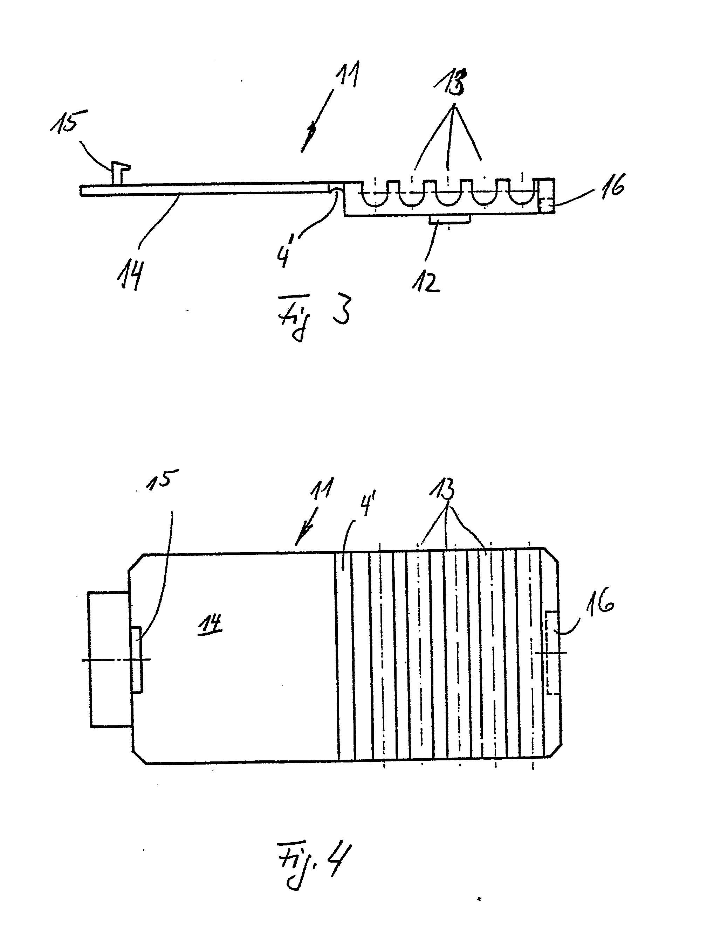

Die allgemein mit 1 bezeichnete Vorrichtung bildet in der nicht dargestellten Verschlußlage eine Kassette aus den beiden in den Figuren 1 und 2 aufgeklappt wiedergegebenen Kunststoffhälften 2 und 3. Die beiden Kunststoffhälften sind über ein sogenanntes Filmscharnier 4 miteinander verbunden und können über Rastzapfen 5 an einer Hälfte, die in entsprechende Rastausnehmungen 6 an der anderen Hälfte eingreifen, gegeneinander verbunden werden.

Beide Kassettenhälften 2 und 3 weisen Halterungen 7 auf, von denen einige mit Führungsbögen 8 ausgerüstet sind, um die außen herum die Lichtwellenleiter-Adern oder die freigelegten Lichtwellenleiter-Fasern gewickelt werden können. Damit wird erreicht, daß ein gewisses Materialreservoir zur Verfügung steht und insbesondere das Verspleißen möglich ist, da hierzu einea gewisse Faserlänge benötigt wird, um die Fasern in die entsprechende Bearbeitungsvorrichtungen einlegen zu können. Die Halterungen 7 übergreifen dabei die aufgewickelten Fasern bzw. Adern mit einer Mehrzahl von Fasern.

Im dargestellten Beispiel weist die Kassettenhälfte 2 eine kammartige Aufnahme 9 für die erstellten Spleiße auf, d.h. sind zwei Glasfasern stirnseitig miteinander verbunden, wird dieser Verbindungsbereich dort ein- bzw. festgelegt.

Um die freien Enden der Lichtwellenleiter-Fasern gegen Feuchtigkeit zu schützen, weist jede Kassettenhälfte 2 bzw. 3 ein Aufnahmeröhrchen 10 für einen Fettvorrat auf, daß in die dann die freien Enden der Glasfaser einschiebbar sind.

Wie sich aus der Fig. 2 ergibt, sind an der Kassettenhälfte 2 im Bereich des Filmscharnieres 4 randseitig je ein Klemmkörper 11 angeordnet, der dort in unterschiedlichen Einbaurichtungen über einen Montagezapfen 12 an der Unterseite (Fig. 3) festlegbar ist. Die beiden Einbaurichtungen sind in Fig. 2 einmal durchgezogen und einmal gestrichelt dargestellt.

Wie in Fig. 4 dargestellt, weist jeder Klemmkörper 11 eine Mehrzahl von Einlaufrinnen 13 für Lichtwellenleiter-Adern auf. Diese Rinnen können mit einem elastischen oder plastischen Material gefüllt sein, in die dann die Ader eingedrückt werden kann. Fixiert werden kann die Ader durch Aufdrücken des mit 14 bezeichneten Deckels, der im dargestellten Beispiel einen Rasthaken 15 aufweist, der hinter eine Nocke 16 in der Verschlußlage greift.

Auf ihrer Unterseite weist im dargestellten Beispiel die Kassettenhälfte 2 zwei Führungsschienen 17 auf, die ein Einschub der Kassette in entsprechende Gegenschienen an externen Halteelementen möglich macht. Zur individuellen Einzelmontage ist die Kassettenhälfte 2 auch mit einem zusätzlichen mit einer Bohrung versehenen zentrischen Montagezapfen 18 ausgerüstet, während die Kassettenhälfte 3 eine damit in der Verschlußlage fluchtende Bohrung 19 aufweist. Damit kann die Kassette 1 einzeln verschraubt werden.

Natürlich ist das beschriebene Ausführungsbeispiel der Erfindung noch in vielfacher Hinsicht abzuändern, ohne den Grundgedanken zu verlassen. So kann beispielsweise ein Klemmkörper 11 in der einen Kassettenhälfte vorgesehen sein, während der andere an der anderen Kassettenhälfte vorgesehen ist, der Deckel 14 des Klemmkörpers 11 kann auf seiner zu den Rinnen 13 weisenden Seiten mit entsprechenden Klemmwülsten versehen sein und dgl. mehr.

## Patentansprüche

1. Vorrichtung zur Spleißaufnahme von Lichtwellenleiter-Fasern und/oder -Adern mit zwei über ein Filmscharnier (4) miteinander verbundenen, zu einer Kassette (1) verschließbaren Kunststoffhälften (2, 3) mit Führungsbögen (8) aufweisenden Halterungen (7) zur Aufnahme mehrerer Faser- und/oder Aderwicklungen als Materialreservoir, dadurch gekennzeichnet, daß die dem Scharnierbereich zugewandten Ecken der Kassette (1) mit unterschiedliche Zuführrichtungen der Lichtwellenfasern und/oder -Adern zulassenden Klemmkörpern (11) ausgerüstet sind, und daß die Klemmkörper in zwei unterschiedlichen Einbaurichtungen festlegbar sind.

2. Vorrichtung nach Anspruch 1, dadurch gekennzeichnet, daß die Klemmkörper (11) mit einer Mehrzahl von Einlaufrinnen (13) für die Lichtwellenleiter-Adern ausgerüstet sind, wobei die Einlaufrinnen (13) von einem über ein Filmscharnier (4') einstückig mit dem Grundkörper verbundenen Deckel (14) fixierbar sind.

3. Vorrichtung nach Anspruch 1 oder 2, dadurch gekennzeichnet, daß jede Kassettenhälfte (2 bzw. 3) mit einem fettgefüllten Aufnahmeelement (10) zur Aufnahme der Enden abgesetzter Lichtwellenleiter ausgerüstet ist.

4. Vorrichtung nach einem der vorangehenden Ansprüche, dadurch gekennzeichnet, daß wenigstens eine Hälfte (2) der Kassette (1) mit Führungsschienen (12) zum Eingriff in entsprechende Halteelemente und/oder zur Verbindung mit einer benachbarten Kassette ausgerüstet ist.

5. Vorrichtung nach einem der vorangehenden Ansprüche, dadurch gekennzeichnet, daß die Kassette (1) mit einem im wesentlichen mittigen Montagezapfen (18) und damit fluchtenden Bohrungen (19) zum Durchtritt einer Fixierschraube o. dgl. ausgerüstet ist.

6. Vorrichtung nach einem der vorangehenden Ansprüche, dadurch gekennzeichnet, daß die Kassettenhälften (2, 3) über Verriegelungszapfen (5) oder dgl. gegeneinander in der Verschlußlage festlegbar sind.

## Revendications

1. Boîtier destiné à recevoir des épissures de fibres et/ou brins optiques, comprenant deux moitiés (2, 3) en matière plastique qui sont reliées l'une à l'autre par l'intermédiaire d'une charnière pelliculaire (4), peuvent être refermées pour former une cassette (1), et présentent des supports (7) munis d'arceaux de guidage (8) pour recevoir plusieurs enroulements de fibres et/ou de brins, en tant que réservoir à matériau, caractérisé par le fait que les coins de la cassette (1) qui sont tournés vers la région de la charnière sont équipés de corps de serrage (11) autorisant différentes directions d'arrivée des fibres et/ou brins optiques; et par le fait que les corps de serrage peuvent être arrêtés dans deux directions d'intégration différentes.

2. Boîtier selon la revendication 1, caractérisé par le fait que les corps de serrage (11) sont pourvus de multiples rigoles (13) de pénétration des brins de guidage des ondes lumineuses, les rigoles de pénétration (13) pouvant être consignées à demeure par un couvercle (14) relié au corps de base, d'un seul tenant, par l'intermédiaire d'une charnière pelliculaire (4').

3. Boîtier selon la revendication 1 ou 2, caractérisé par le fait que chaque moitié (2, respectivement 3) de la cassette est équipée d'un élément récepteur (10) empli de graisse, afin de recevoir les extrémités de guides d'ondes lumineuses dénudés.

4. Boîtier selon l'une des revendications précédentes, caractérisé par le fait qu'au moins une moitié (2) de la cassette (1) est dotée de glissières de guidage (17), en vue de l'engagement dans des éléments de retenue correspondants et/ou de la solidarisation avec une cassette voisine.

5. Boîtier selon l'une des revendications précédentes, caractérisé par le fait que la cassette (1) est munie d'un tenon de montage (18) substantiellement central, ainsi que de perçages (19) qui coïncident avec ce tenon pour permettre le passage d'une vis de fixation ou élément similaire.

6. Boîtier selon l'une des revendications précédentes, caractérisé par le fait que les moitiés (2, 3) de la cassette peuvent être arrêtées l'une par rapport à l'autre, dans la position fermée, par l'intermédiaire de tétons de verrouillage (5) ou éléments similaires.

**Claims**

1. A device for receiving for splicing optical fibres and/or cables, comprising two plastics halves (2, 3) which are connected together by way of a film hinge (4) and which can be closed to form a cassette (1), with holders (7) having arcuate guide portions (8), for receiving a plurality of windings of fibre and/or cable as a reservoir of material, characterised in that the corners of the cassette (1), which are towards the hinge region, are provided with clamping members (11) which permit different directions of feed of the optical fibres and/or cables, and that the clamping can be fixed in two different directions of installation.

2. A device according to claim 1 characterised in that the clamping members (11) are provided with a plurality of entrance channels (13) for the optical cables, wherein the entrance channels (13) can be fixed by a cover (14) which is integrally connected to the main body portion by way of a film hinge (14').

3. A device according to claim 1 or claim 2 characterised in that each half (2 or 3) of the cassette is provided with a grease-filled receiving element (10) for receiving the ends of detached light wave guides.

4. A device according to one of the preceding claims characterised in that at least one half (2) of the cassette (1) is provided with guide bars (12) for engagement into corresponding holding elements and/or connection to an adjacent cassette.

5. A device according to one of the preceding claims characterised in that the cassette (1) is provided with a substantially central mounting projection (18) and bores (19) aligned therewith for a fixing screw or the like to pass therethrough.

6. A device according to one of the preceding claims characterised in that the halves (2, 3) of the cassette can be fixed relative to each other in the closure position by locking projections (5) or the like.

Fig. 1

Fig. 2

Fig 3

Fig. 4